# EUROPEAN PATENT APPLICATION

(11) **EP 4 549 004 A1**
(43) Date of publication of application: **07.05.2025**
(21) Application number: 23831188.0
(22) Date of filing: 19.06.2023
(51) Int. Cl.: B01D 61/36, B01D 61/58

(54) **MEMBRANE SEPARATION SYSTEM AND METHOD FOR OPERATING MEMBRANE SEPARATION DEVICE**

(30) Priority: 28.06.2022 JP 2022103713
(71) Applicant: NITTO DENKO CORPORATION, Ibaraki-shi Osaka 567-8680 (JP)
(72) Inventor: KIMURA, Naomichi, Ibaraki-shi, Osaka 567-8680 (JP); OGAWA, Tomoya, Ibaraki-shi, Osaka 567-8680 (JP); NAKANO, Takeshi, Ibaraki-shi, Osaka 567-8680 (JP)
(74) Representative: Hoffmann Eitle
(86) International application number: PCT/JP2023/022666
(87) International publication number: WO 2024/004742

(57) **Abstract**

The present invention provides a membrane separation system that makes it possible, by a process using a pervaporation membrane, to obtain a non-permeated fluid sufficiently suitable to be reused. A membrane separation system 100 of the present invention includes a membrane separation device 10. The membrane separation device 10 has a pervaporation membrane 11. The pervaporation membrane 11 separates a fermented liquid S containing a volatile organic compound C and a microorganism that generates the organic compound C into a permeated fluid and a non-permeated fluid. The membrane separation system 100 adjusts a temperature of the membrane separation device 10 so that an absolute value of a difference between a temperature T1 (°C) of the fermented liquid S to be supplied to the membrane separation device 10 and a temperature T2 (°C) of the non-permeated fluid discharged from the membrane separation device 10 is less than 10°C.

## Description

### TECHNICAL FIELD

The present invention relates to a membrane separation system and a method for operating a membrane separation device.

### BACKGROUND ART

There have been developed methods for producing a volatile organic compound (a fermented product), such as an alcohol, by fermenting a carbon source, such as glucose, by using a microorganism. The fermentation of a carbon source is carried out in an aqueous solution, for example. In this method, the fermentation by a microorganism stops in some cases when the content of the fermented product in the aqueous solution increases. In order to continue the production of the fermented product by a microorganism, it is necessary to separate the fermented product from the aqueous solution.

As an example of the method for separating a volatile organic compound from an aqueous solution containing the organic compound, a pervaporation method using a pervaporation membrane can be mentioned. The pervaporation method is suitable for separating a volatile organic compound from an aqueous solution containing various substances. The pervaporation method also tends to be able to better suppress the amount of energy consumption and the amount of carbon dioxide emission than a distillation method. By combining a membrane separation device that performs the pervaporation method with a fermenter that produces a fermented product, it is possible to produce a fermented product continuously. For example, Patent Literature 1 discloses a membrane separation system obtained by combining a membrane separation device with a fermenter. Patent Literature 1 discloses to reuse a non-permeated fluid by returning to a fermenter a fermented liquid (the non-permeated fluid) not having permeated through a pervaporation membrane.

### CITATION LIST

### Patent Literature

Patent Literature 1: JP 4048279 B

### SUMMARY OF INVENTION

### Technical Problem

In the case of separating a feed liquid into a permeated fluid and a non-permeated fluid using a pervaporation membrane, the permeated fluid is usually obtained in the state of a gas. That is, in the pervaporation method, the feed liquid having permeated through the pervaporation membrane evaporates, so that the permeated fluid that is a gas is obtained. Since the evaporation of the feed liquid usually requires thermal energy, a significant temperature change can occur in the feed liquid (the non-permeated fluid) after being processed.

In the case where a fermented liquid containing a fermented product and a microorganism that generates the fermented product is used as the feed liquid, the above-mentioned temperature change tends to add stress to the microorganism in the fermented liquid. Thereby, the microorganism capable of generating the fermented product decreases in the fermented liquid, and the microorganism dies out in some cases. When the fermented liquid (the non-permeated fluid) in which a significant temperature change has occurred is supplied to a fermenter, a temperature change also occurs in the fermented liquid stored in the fermenter, and the microorganism in the fermented liquid also decreases in some cases. Thus, conventionally, it cannot be said that the fermented liquid (the non-permeated fluid) processed with the pervaporation membrane is sufficiently suitable to be reused.

Therefore, the present invention is intended to provide a membrane separation system that makes it possible, by a process using a pervaporation membrane, to obtain a non-permeated fluid sufficiently suitable to be reused.

### Solution to Problem

The present invention provides a membrane separation system including a membrane separation device, wherein
the membrane separation device has a pervaporation membrane,
the pervaporation membrane separates a fermented liquid containing a volatile organic compound and a microorganism that generates the organic compound into a permeated fluid and a non-permeated fluid, and
the membrane separation system adjusts a temperature of the membrane separation device so that an absolute value of a difference between a temperature T1 (°C) of the fermented liquid to be supplied to the membrane separation device and a temperature T2 (°C) of the non-permeated fluid discharged from the membrane separation device is less than 10°C.

The present invention further provides a method for operating a membrane separation device having a pervaporation membrane, including:
a supply step of supplying a fermented liquid containing a volatile organic compound and a microorganism that generates the organic compound to the membrane separation device; and
a membrane separation step of separating the fermented liquid into a permeated fluid and a non-permeated fluid with the pervaporation membrane, wherein
the membrane separation step is performed in a state in which a temperature of the membrane separation device is adjusted so that an absolute value of a difference between a temperature T1 (°C) of the fermented liquid supplied in the supply step and a temperature T2 (°C) of the non-permeated fluid discharged from the membrane separation device is less than 10°C.

### Advantageous Effects of Invention

The present invention can provide a membrane separation system that makes it possible, by a process using a pervaporation membrane, to obtain a non-permeated fluid sufficiently suitable to be reused.

### BRIEF DESCRIPTION OF DRAWINGS

FIG. 1 is a schematic configuration diagram showing an example of a membrane separation system of Embodiment 1.
FIG. 2 is a schematic cross-sectional view showing an example of a heating unit included in the membrane separation system.
FIG. 3 is a schematic cross-sectional view showing an example of a membrane separation device.
FIG. 4 is a schematic cross-sectional view of a pervaporation membrane included in the membrane separation device.
FIG. 5 is a developed perspective view schematically showing another example of the membrane separation device.
FIG. 6A is a schematic configuration diagram showing a modification of the membrane separation system.
FIG. 6B is a schematic configuration diagram showing a modification of the membrane separation system.
FIG. 7 is a schematic configuration diagram showing an example of a membrane separation system of Embodiment 2.

### DESCRIPTION OF EMBODIMENTS

A membrane separation system according to a first aspect of the present invention is a membrane separation system including a membrane separation device, wherein
the membrane separation device has a pervaporation membrane,
the pervaporation membrane separates a fermented liquid containing a volatile organic compound and a microorganism that generates the organic compound into a permeated fluid and a non-permeated fluid, and
the membrane separation system adjusts a temperature of the membrane separation device so that an absolute value of a difference between a temperature T1 (°C) of the fermented liquid to be supplied to the membrane separation device and a temperature T2 (°C) of the non-permeated fluid discharged from the membrane separation device is less than 10°C.

According to a second aspect of the present invention, for example, the membrane separation system according to the first aspect adjusts the temperature of the membrane separation device so that the absolute value is less than 3°C.

According to a third aspect of the present invention, for example, in the membrane separation system according to the first or second aspect, the temperature T1 is 30°C to 75°C.

According to a fourth aspect of the present invention, for example, the membrane separation system according to any one of the first to third aspects further includes a heating unit that heats the membrane separation device.

According to a fifth aspect of the present invention, for example, in the membrane separation system according to any one of the first to fourth aspects, a content of the organic compound in the permeated fluid is higher than a content of the organic compound in the fermented liquid.

According to a sixth aspect of the present invention, for example, in the membrane separation system according to any one of the first to fifth aspects, the organic compound is an alcohol.

According to a seventh aspect of the present invention, for example, the membrane separation system according to any one of the first to sixth aspects further includes a tank that stores the fermented liquid to be supplied to the membrane separation device.

According to an eighth aspect of the present invention, for example, the membrane separation system according to the seventh aspect further includes a non-permeated fluid discharge passage connected to the membrane separation device and configured to discharge the non-permeated fluid from the membrane separation device, wherein
the non-permeated fluid discharge passage is connected to the tank.

According to a ninth aspect of the present invention, for example, the membrane separation system according to any one of the first to eighth aspects further includes a second membrane separation device having a second pervaporation membrane that separates the permeated fluid into a second permeated fluid and a second non-permeated fluid.

According to a tenth aspect of the present invention, for example, in the membrane separation system according to the ninth aspect, a temperature of the second non-permeated fluid discharged from the second membrane separation device is 30°C to 75°C.

According to an eleventh aspect of the present invention, for example, the membrane separation system according to the ninth or tenth aspect further includes:
a tank that stores the fermented liquid to be supplied to the membrane separation device; and
a second non-permeated fluid discharge passage connected to the second membrane separation device and configured to discharge the second non-permeated fluid from the second membrane separation device, wherein
the second non-permeated fluid discharge passage is connected to the tank.

A method for operating a membrane separation device according to a twelfth aspect of the present invention is a method for operating a membrane separation device having a pervaporation membrane, including:
a supply step of supplying a fermented liquid containing a volatile organic compound and a microorganism that generates the organic compound to the membrane separation device; and
a membrane separation step of separating the fermented liquid into a permeated fluid and a non-permeated fluid with the pervaporation membrane, wherein
the membrane separation step is performed in a state in which a temperature of the membrane separation device is adjusted so that an absolute value of a difference between a temperature T1 (°C) of the fermented liquid supplied in the supply step and a temperature T2 (°C) of the non-permeated fluid discharged from the membrane separation device is less than 10°C.

The present invention will be described in detail below. The following description is not intended to limit the present invention to a specific embodiment.

### <Embodiment 1>

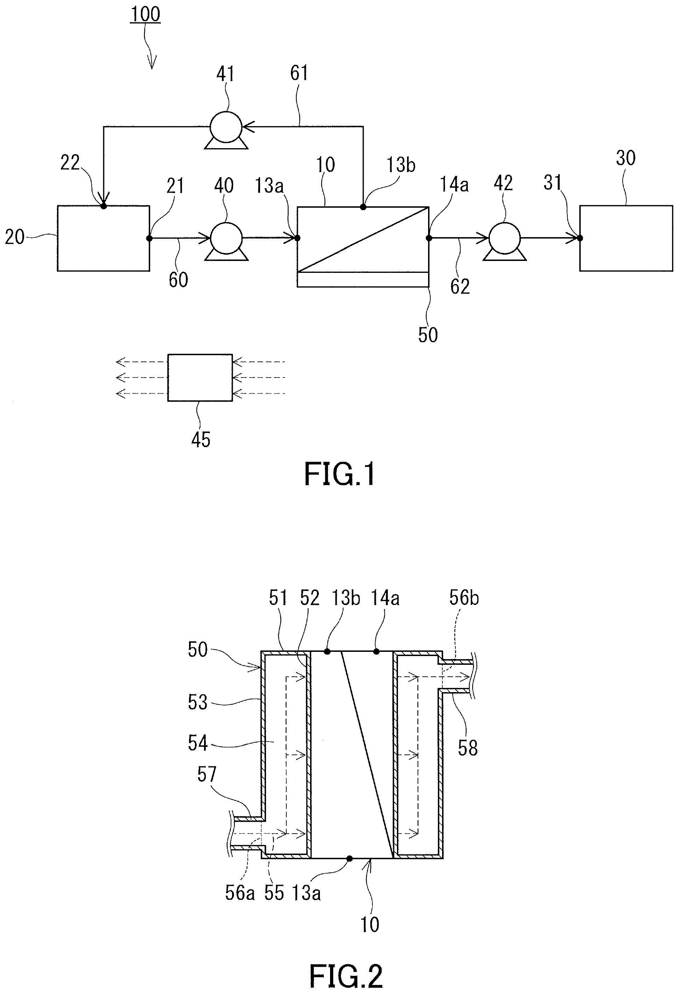

As shown in FIG. 1, a membrane separation system 100 of Embodiment 1 includes a membrane separation device 10. The membrane separation device 10 has a pervaporation membrane, and a feed space and a permeation space separated from each other by the pervaporation membrane. The pervaporation membrane can separate a fermented liquid S containing a volatile organic compound C and a microorganism that generates the organic compound C into a permeated fluid and a non-permeated fluid. Note that the microorganism that generates the organic compound C is typically a bacterium.

The membrane separation system 100 adjusts a temperature of the membrane separation device 10 so that an absolute value (|T1-T2|) of a difference between a temperature T1 (°C) of the fermented liquid S to be supplied to the membrane separation device 10 and a temperature T2 (°C) of the non-permeated fluid discharged from the membrane separation device 10 is less than 10°C.

As described above, the membrane separation device 10 is a device that performs membrane separation for the fermented liquid S by using the pervaporation membrane. The pervaporation membrane is typically a membrane that allows the organic compound C contained in the fermented liquid S to preferentially permeate therethrough. Accordingly, the permeated fluid separated by the pervaporation membrane has a content of the organic compound C higher than that in the fermented liquid S. In contrast, the non-permeated fluid has a content of the organic compound C lower than that in the fermented liquid S.

The membrane separation system 100 further includes a heating unit 50 that heats the membrane separation device 10. The heating unit 50 is positioned in the vicinity of the membrane separation device 10 and is, for example, in direct contact with the membrane separation device 10. The heating unit 50 may surround the membrane separation device 10. The membrane separation system 100 may include a heat pump, and a heat exchanger included in the heat pump may function as the heating unit 50. The heating unit 50 may be configured to use heat (waste heat) obtained by another heat exchanger (such as a heat exchanger provided to the later-described permeated fluid discharge passage 62) included in the membrane separation system 100. Note that the heating unit 50 may be a heater such as an electric heater.

The membrane separation system 100 further includes a tank 20 in addition to the membrane separation device 10. The tank 20 stores the fermented liquid S to be supplied to the membrane separation device 10. The tank 20 may be a fermenter for generating the organic compound C by fermentation of a carbon source by a microorganism.

The membrane separation system 100 further includes a fermented liquid feed passage 60, a non-permeated fluid discharge passage 61, and a permeated fluid discharge passage 62. The fermented liquid feed passage 60 is a passage for supplying the fermented liquid S from the tank 20 to the membrane separation device 10 during operation, and is connected to an outlet 21 of the tank 20 and a feed space inlet 13a of the membrane separation device 10. The fermented liquid feed passage 60 is provided, for example, with a pump 40 that controls a flow rate of the fermented liquid S. The fermented liquid feed passage 60 may be provided with a temperature sensor (not shown) for measuring the temperature T1 of the fermented liquid S to be supplied to the membrane separation device 10. The temperature sensor is positioned between the pump 40 and the membrane separation device 10, for example, and preferably in the vicinity of the feed space inlet 13a of the membrane separation device 10.

The non-permeated fluid discharge passage 61 is a passage for discharging the non-permeated fluid from the membrane separation device 10 during operation, and is connected to a feed space outlet 13b of the membrane separation device 10. The non-permeated fluid discharge passage 61 is provided, for example, with a pump 41 that controls a flow rate of the non-permeated fluid. Note that the non-permeated fluid discharge passage 61 may not be provided with the pump 41. The non-permeated fluid discharge passage 61 may be provided with a temperature sensor (not shown) for measuring the temperature T2 of the non-permeated fluid discharged from the membrane separation device 10. The temperature sensor is positioned between the membrane separation device 10 and the pump 41, for example, and preferably in the vicinity of the feed space outlet 13b of the membrane separation device 10.

The non-permeated fluid discharge passage 61 may be connected to an inlet 22 of the tank 20 and configured to deliver the non-permeated fluid to the tank 20 during operation. That is, the non-permeated fluid discharge passage 61 may be configured to allow the non-permeated fluid to be mixed with the fermented liquid S in the tank 20 and to circulate through the fermented liquid feed passage 60 and the non-permeated fluid discharge passage 61. In the case where the non-permeated fluid is delivered to the tank 20, the fermented liquid S is mixed with the non-permeated fluid and the content of the organic compound C in the fermented liquid S decreases in the tank 20. In the case where the tank 20 is a fermenter, a decrease in the content of the organic compound C in the fermented liquid S can inhibit the fermentation by the microorganism from stopping, thereby making it possible to produce the fermented product continuously.

The permeated fluid discharge passage 62 is a passage for discharging the permeated fluid from the membrane separation device 10 during operation, and is connected to a permeation space outlet 14a of the membrane separation device 10. The permeated fluid discharge passage 62 is provided with a decompression device 42, for example. The decompression device 42 can decompress an inside of the permeation space of the membrane separation device 10. Preferably, the decompression device 42 is a vacuum device such as a vacuum pump. The vacuum pump is typically a gas transport vacuum pump, and a reciprocating vacuum pump and a rotary vacuum pump, etc. can be mentioned. Examples of the reciprocating vacuum pump include a diaphragm vacuum pump and a rocking piston vacuum pump. Examples of the rotary vacuum pump include: a liquid seal pump; an oil rotary pump (a rotary pump); a mechanical booster pump; and various kinds of dry pumps such as a roots dry pump, a claw dry pump, a screw dry pump, a turbo dry pump, and a scroll dry pump. The pump as the decompression device 42 may include a variable speed mechanism for changing a rotational speed, etc. An example of the variable speed mechanism is an inverter that drives a motor of the pump. By controlling the rotational speed, etc. of the pump by the variable speed mechanism, it is possible to adjust properly a pressure in the permeation space of the membrane separation device 10.

The permeated fluid discharge passage 62 may be further provided with a heat exchanger for cooling the permeated fluid. The heat exchanger makes it possible to condense the permeated fluid that is a gas. The heat exchanger is, for example, a gas-liquid heat exchanger that causes heat exchange between a cooling medium, such as an antifreeze, and the permeated fluid that is a gas. The heat exchanger may be positioned between the membrane separation device 10 and the decompression device 42 (upstream of the decompression device 42), or between the decompression device 42 and the later-described recovery unit 30 (downstream of the decompression device 42).

The membrane separation system 100 further includes a recovery unit 30. The recovery unit 30 recovers the permeated fluid delivered from the membrane separation device 10 and can, for example, store the permeated fluid. The recovery unit 30 is, for example, a tank that stores the permeated fluid. The permeated fluid discharge passage 62 is connected to an inlet 31 of the recovery unit 30.

The membrane separation system 100 may further include a controller 45 that controls each member of the membrane separation system 100. The controller 45 is, for example, a DSP (Digital Signal Processor) including an A/D conversion circuit, an input/output circuit, an arithmetic circuit, a storage device, etc. A program for operating properly the membrane separation system 100 is stored in the controller 45. For example, the controller 45 can control behavior of the heating unit 50 and adjust the temperature of the membrane separation device 10.

Each passage of the membrane separation system 100 is composed of, for example, a metal or resin pipe unless otherwise noted.

### [Heating unit]

As shown in FIG. 2, the heating unit 50 may have a body portion 51 in which an accommodation space 54 is formed, and may be configured to introduce a heating medium 55 for heating the membrane separation device 10 to the accommodation space 54. Specifically, the body portion 51 includes an inner wall 52 and an outer wall 53 in the heating unit 50. The accommodation space 54 is formed between the inner wall 52 and the outer wall 53. The inner wall 52 and the outer wall 53 each has a shape that is cylindrical, for example, and it may be circular cylindrical. For example, the inner wall 52 surrounds the membrane separation device 10 and is in direct contact with the membrane separation device 10.

In the outer wall 53, an opening 56a and an opening 56b positioned above the opening 56a are formed, for example. The opening 56a is connected to a heating medium feed passage 57 for supplying the heating medium 55 to the accommodation space 54, and functions as a heating medium inlet. The opening 56b is connected to a heating medium discharge passage 58 for discharging the heating medium 55 from the accommodation space 54, and functions as a heating medium outlet.

The heating medium 55 is introduced to the accommodation space 54 via the opening 56a. The heating medium 55 introduced to the accommodation space 54 exchanges heat with the membrane separation device 10 via the inner wall 52 and heats the membrane separation device 10. The heating medium 55 having exchanged heat with the membrane separation device 10 is discharged from the accommodation space 54 via the opening 56b. The heating unit 50 may be configured in such a manner that the heating medium discharge passage 58 is connected to the heating medium feed passage 57 and the heating medium 55 circulates through the heating medium feed passage 57, the accommodation space 54, and the heating medium discharge passage 58.

The heating medium 55 is typically warm water. However, the heating medium 55 may be steam (such as water vapor). The steam may be used under a pressure equal to or higher than an atmospheric pressure of an ambient environment, or may be used under a pressure lower than the atmospheric pressure of the ambient environment. In the present description, the steam used under a pressure lower than the atmospheric pressure of the ambient environment may be referred to as vacuum steam. A temperature of the heating medium 55 is set so that the above-mentioned absolute value |T1-T2| is less than 10°C. The temperature of the heating medium 55 may be comparable to the temperature T1 of the fermented liquid S to be supplied to the membrane separation device 10.

The heating unit 50 is not limited to the one shown in FIG. 2. The heating unit 50 may be a heater (particularly an electric heater) disposed in such a manner as to cover the membrane separation device 10.

### [Membrane separation device]

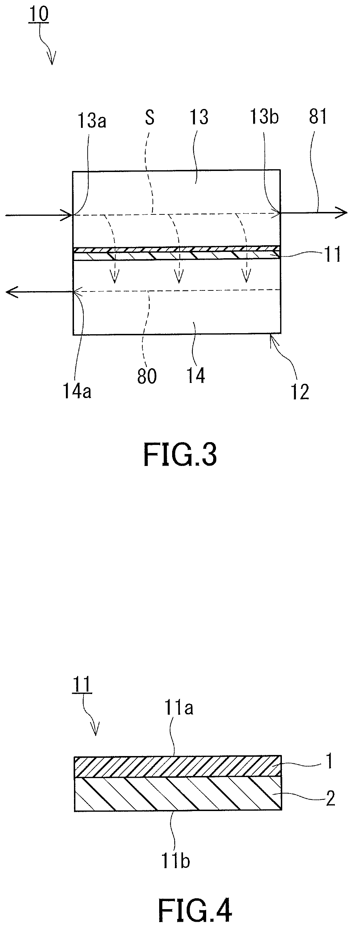

As shown in FIG. 3, the membrane separation device 10 includes a pervaporation membrane 11 and a tank 12. The tank 12 has a first chamber 13 and a second chamber 14. The first chamber 13 functions as the feed space to which the fermented liquid S is supplied. The second chamber 14 functions as the permeation space to which a permeated fluid 80 is supplied. The permeated fluid 80 is obtained by allowing the fermented liquid S to permeate through the pervaporation membrane 11.

The pervaporation membrane 11 is placed in the tank 12. In the tank 12, the pervaporation membrane 11 separates the first chamber 13 and the second chamber 14 from each other. The pervaporation membrane 11 extends from one of a pair of wall surfaces of the tank 12 to the other.

The first chamber 13 has the feed space inlet 13a and the feed space outlet 13b. The second chamber 14 has the permeation space outlet 14a. The feed space inlet 13a is an opening for supplying the fermented liquid S to the feed space (the first chamber 13). The permeation space outlet 14a is an opening for discharging the permeated fluid 80 from the permeation space (the second chamber 14). The feed space outlet 13b is an opening for discharging, from the feed space (the first chamber 13), the fermented liquid S (a non-permeated fluid 81) not having permeated through the pervaporation membrane 11. The feed space inlet 13a, the feed space outlet 13b, and the permeation space outlet 14a are formed, for example, in wall surfaces of the tank 12.

The membrane separation device 10 is suitable for a flow-type (continuous-type) membrane separation method. However, the membrane separation device 10 may be used for a batch-type membrane separation method.

### (Pervaporation membrane)

As described above, the pervaporation membrane 11 is typically a membrane (a separation membrane) that allows the organic compound C contained in the fermented liquid S to preferentially permeate therethrough. The pervaporation membrane 11 allows the permeated fluid 80 that is a gas and contains the organic compound C to be generated by a pervaporation method.

As shown in FIG. 4, the pervaporation membrane 11 includes, for example, a separation functional layer 1 and a porous support member 2 supporting the separation functional layer 1. The pervaporation membrane 11 may further include a protective layer (not shown) that protects the separation functional layer 1. The separation functional layer 1 is in direct contact with the porous support member 2, for example. For example, the pervaporation membrane 11 has a principal surface 11a, on the separation functional layer side, that is exposed to the first chamber 13 and a principal surface 11b, on the porous support member side, that is exposed to the second chamber 14.

### (Separation functional layer)

The separation functional layer 1 is typically a layer that allows the organic compound C contained in the fermented liquid S to preferentially permeate therethrough. The separation functional layer 1 includes a hydrophobic material, for example. In the present description, the term "hydrophobic material" refers to, for example, a material that has a static contact angle exceeding 90°C with respect to water when a 10 µL drop of the water (temperature 25°C) is dropped on a surface of a specimen composed of the material. Note that the static contact angle with respect to water can be measured using a commercially available contact angle meter.

Examples of the hydrophobic material include a compound having a siloxane bond (a Si-O-Si bond), an olefin-based polymer, an oil, and a fluorine-based compound. The separation functional layer 1 preferably includes a compound having a siloxane bond as the hydrophobic material. The compound having a siloxane bond is typically a silicone-based polymer. The silicone-based polymer may be a solid or a liquid at 25°C. Specific examples of the silicone-based polymer include polydimethylsiloxane (PDMS). Specific examples of the olefin-based polymer include polyethylene and polypropylene. Examples of the oil include a hydrocarbon-based oil such as liquid paraffin. Examples of the fluorine-based compound include polytetrafluoroethylene (PTFE), polyvinylidene fluoride (PVDF), and tetrafluoroethylene-perfluoroalkyl vinyl ether copolymer (PFA). These hydrophobic materials can be used alone or two or more of them can be used in combination.

The separation functional layer 1 may include the hydrophobic material as a main component, or may be composed substantially of the hydrophobic material alone. The term "main component" means a component having a largest content in the separation functional layer 1 in terms of weight ratio.

The separation functional layer 1 may include a matrix including the hydrophobic material and a filler dispersed in the matrix. The filler is buried in the matrix. In the matrix, all particles of the filler may be spaced from each other or may aggregate partially.

The filler includes, for example, an inorganic material such as zeolite, silica, or bentonite. The zeolite included in the filler is preferably a high-silica zeolite having a high ratio of silica with respect to alumina. Having high resistance to hydrolysis, the high-silica zeolite is suitably used for separating the fermented liquid S. Examples of the high-silica zeolite to be used include HSZ (registered trademark) available from Tosoh Corporation, HiSiv (registered trademark) available from UNION SHOWA K.K., USKY available from UNION SHOWA K.K., and Zeoal (registered trademark) available from Nakamura Choukou Co., Ltd.

The filler may include a metal organic framework (MOF). The metal organic framework is also referred to as a porous coordination polymer (PCP). The metal organic framework is preferably hydrophobic. The metal organic framework includes a metal ion and an organic ligand, for example. Examples of the metal ion include a Zn ion. The organic ligand includes an aromatic ring, for example. Examples of the aromatic ring included in the organic ligand include an imidazole ring. Examples of the organic ligand include 2-methylimidazole. Specific examples of the metal organic framework include ZIF-8.

The filler is in the form of particles, for example. The term "form of particles" herein includes spherical, elliptical, flaky, and fibrous forms. An average particle diameter of the filler is, for example, but not particularly limited to, 50 µm or less, preferably 20 µm or less, and more preferably 10 µm or less. The lower limit of the average particle diameter of the filler is 0.01 µm, for example. The average particle diameter of the filler can be determined by the following method, for example. First, a cross-section of the separation functional layer 1 is observed using a transmission electron microscope. The area of a specific particle of the filler on the resulting electron microscope image is calculated by image processing. The diameter of a circle having the same area as the calculated area is regarded as the particle diameter (the diameter of the particle) of the specific filler particle. The particle diameter is calculated for any number (at least 50) of the filler particles, and the average of the calculated values is regarded as the average particle diameter of the filler.

A content of the filler in the separation functional layer 1 is, for example, 10 wt% or more, preferably 30 wt% or more, and more preferably 40 wt% or more. The upper limit of the content of the filler in the separation functional layer 1 is, for example, but not particularly limited to, 70 wt%. A content of the matrix in the separation functional layer 1 is, for example, but not particularly limited to, 30 wt% to 90 wt%.

The separation functional layer 1 has a thickness of, for example, 200 µm or less, preferably 100 µm or less, and more preferably 80 µm or less. The separation functional layer 1 may have a thickness of 1.0 µm or more, 10 µm or more, or 30 µm or more.

The separation functional layer 1 may have a microporous structure with an average pore diameter of less than 0.01 µm, but may be a dense layer having no pore on its surface.

### (Porous support member)

Examples of the porous support member 2 include: a nonwoven fabric; porous polytetrafluoroethylene; aromatic polyamide fiber; a porous metal; a sintered metal; porous ceramic; porous polyester; porous nylon; activated carbon fiber; latex; silicone; silicone rubber; a permeable (porous) polymer including at least one selected from the group consisting of polyvinyl fluoride, polyvinylidene fluoride, polyurethane, polypropylene, polyethylene, polystyrene, polycarbonate, polysulfone, polyether ether ketone, polyacrylonitrile, polyimide, and polyphenylene oxide; a metallic foam having an open cell or a closed cell; a polymer foam having an open cell or a closed cell; silica; a porous glass; and a mesh screen. The porous support member 2 may be a combination of two or more of these materials.

The porous support member 2 has an average pore diameter of 0.01 to 0.4 µm, for example. A thickness of the porous support 2 is, for example, but not particularly limited to, 10 µm or more, preferably 50 µm or more, and more preferably 100 µm or more. The thickness of the porous support 2 is, for example, 300 µm or less, and preferably 200 µm or less.

### (Protective layer)

The protective layer covers a surface of the separation functional layer 1, for example. A material of the protective layer is, for example, but not particularly limited to, a silicone resin. The material of the protective layer may be the same as that of the matrix of the separation functional layer 1. A thickness of the protective layer is, for example, but not particularly limited to, 0.5 µm or more, preferably 1 µm or more, more preferably 5 µm or more, and still more preferably 10 µm or more. The thickness of the protective layer is, for example, 100 µm or less, preferably 50 µm or less, and more preferably 30 µm or less.

### (Method for producing pervaporation membrane)

The pervaporation membrane 11 can be produced by, for example, forming the separation functional layer 1 on the porous support member 2. Specifically, a coating liquid containing the materials of the separation functional layer 1 is prepared first. The coating liquid may contain, in addition to the filler, a dispersant for dispersing the filler in the coating liquid. In the case where the coating liquid contains the compound having a siloxane bond, the coating liquid may further contain a catalyst for curing the compound. Next, the coating liquid is applied onto the porous support 2 to obtain a coating. The coating is dried to obtain the separation functional layer 1.

### [Operation of membrane separation system]

A method for operating the membrane separation system 100 (and the membrane separation device 10) includes, for example: a supply step of supplying the fermented liquid S to the membrane separation device 10; and a membrane separation step of separating the fermented liquid S into the permeated fluid 80 and the non-permeated fluid 81 with the pervaporation membrane 11. In the supply step, the fermented liquid S is supplied to the first chamber 13 of the membrane separation device 10 via the feed space inlet 13a as shown in FIG. 3. This makes it possible to bring the fermented liquid S into contact with one surface (the principal surface 11a, for example) of the pervaporation membrane 11.

As described above, the fermented liquid S contains the volatile organic compound C and the microorganism that generates the organic compound C. The fermented liquid S contains water, for example, other than the organic compound C and the microorganism. The fermented liquid S is typically an aqueous solution containing the organic compound C and the microorganism.

The organic compound C contained in the fermented liquid S is not particularly limited as long as the organic compound C has volatility. In the present description, the term "organic compound having volatility" refers to an organic compound that has a boiling point of 20°C to 260°C, preferably 50°C to 260°C, under an atmospheric pressure (101.325 kPa). Note that the organic compound C allows, for example, an aqueous phase containing water as a main component and an organic phase having a content of the organic compound C higher than that in the aqueous phase to be generated when a concentration of the organic compound C is high in the aqueous solution.

The number of carbon atoms in the organic compound C is, for example, but not particularly limited to, 10 or less, and may be 8 or less, 6 or less, or even 4 or less. The lower limit of the number of carbon atoms in the organic compound C may be 1 or 2. The organic compound C has, for example, a functional group including an oxygen atom, such as a hydroxyl group, a carbonyl group, an ether group, and an ester group. In the organic compound C, the number of the functional groups including an oxygen atom is typically one.

Examples of the organic compound C include an alcohol, ketone, and ester, and preferred is an alcohol. In the case where the organic compound C is an alcohol, the organic compound C is likely to be compatible with water and thus unlikely to cause unevenness in an environment in its system. The alcohol may be an alkyl alcohol composed only of an alkyl group and a hydroxyl group, or may be an aryl alcohol including an aryl group and a hydroxyl group. The alkyl alcohol may be linear, branched, or cyclic. Examples of the alkyl alcohol include methanol, ethanol, n-propanol, isopropanol, n-butanol, 2-butanol, isobutanol, t-butanol, and n-pentanol, and preferred is n-butanol. N-butanol is a compound that allows two phases (an aqueous phase and an organic phase) to be generated from an aqueous solution thereof when a content of the compound in the aqueous solution is around 8 wt% or more. Therefore, in the case where the organic compound C is n-butanol, it is possible, by adjusting the content of the organic compound C in the permeated fluid to be around 8 wt% or more, for example, to generate an aqueous phase and an organic phase in the permeated fluid after the permeated fluid is liquefied. In this case, it is possible to refine the permeated fluid easily by separating the aqueous phase and the organic phase from each other. Examples of the aryl alcohol include phenol.

The ketone may be dialkylketone composed only of an alkyl group and a carbonyl group. Examples of the dialkylketone include methyl ethyl ketone (MEK) and acetone.

The ester may be aliphatic alkylester composed only of an alkyl group and an ester group. Examples of the aliphatic alkylester include ethyl acetate.

Note that the organic compound C is not limited to those mentioned above. The organic compound C may be aromatic hydrocarbon such as benzene, toluene, or xylene.

The fermented liquid S may contain one kind of the organic compound C, or two or more kinds of the organic compounds C. The content of the organic compound C in the fermented liquid S is, for example, 50 wt% or less, and may be 30 wt% or less, 10 wt% or less, 5 wt% or less, 2 wt% or less, or even 1 wt% or less. The lower limit of the content of the organic compound C is, for example, but not particularly limited to, 0.01 wt%.

The organic compound C is a fermented product generated by fermentation of a carbon source by a microorganism, and preferably an alcohol (bioalcohol) generated by a microorganism.

The fermented liquid S may further contain an additional component, such as a carbon source, a nitrogen source, or an inorganic ion, other than water, the organic compound C, and the microorganism. Examples of the carbon source include polysaccharides such as starch, and monosaccharides such as glucose.

The amount of the fermented liquid S to be supplied to the membrane separation device 10 is not particularly limited and is determined according to the processing capacity of the membrane separation device 10.

The fermented liquid S to be supplied to the membrane separation device 10 may or may not be heated in advance. The temperature T1 of the fermented liquid S to be supplied to the membrane separation device 10 is equal to or higher than a temperature T3 of the fermented liquid S in the tank 20, for example. In the case where the tank 20 is a fermenter, the temperature T3 is set to a temperature (a fermentation temperature) that accelerates the generation of the organic compound C by the microorganism. The temperature T3 is, for example, 15°C to 40°C, and preferably 30°C to 40°C. The temperature T1 is lower than a temperature T4 at which the microorganism in the fermented liquid S dies out, for example. That is, the temperature T1, T3, and T4 satisfy a relationship of T4 > T1 ≥ T3, for example. The temperature T1 of the fermented liquid S to be supplied to the membrane separation device 10 is, for example, 15°C to 75°C, and may be 30°C to 75°C, or 30°C to 50°C.

The membrane separation step is performed by the following method. First, in a state in which the fermented liquid S is in contact with one surface of the pervaporation membrane 11, a space adjacent to another surface (the principal surface 11b, for example) of the pervaporation membrane 11 is decompressed. Specifically, an inside of the second chamber 14 is decompressed via the permeation space outlet 14a. The inside of the second chamber 14 can be decompressed by the decompression device 42, for example. A pressure in the second chamber 14 is, for example, 50 kPa or less, and may be 20 kPa or less, 10 kPa or less, 5 kPa or less, 3 kPa or less, or even 2 kPa or less. In the present description, the term "pressure" means an absolute pressure unless otherwise noted.

Decompressing the inside of the second chamber 14 makes it possible to obtain, on the side of the other surface of the pervaporation membrane 11, the permeated fluid 80 having a high content of the organic compound C. In other words, the permeated fluid 80 is supplied to the second chamber 14. In the second chamber 14, the permeated fluid 80 is typically a gas. The permeated fluid 80 is discharged outside the membrane separation device 10 via the permeation space outlet 14a.

On the other hand, the content of the organic compound C in the fermented liquid S gradually decreases from the feed space inlet 13a to the feed space outlet 13b in the first chamber 13. The fermented liquid S (the non-permeated fluid 81) processed in the first chamber 13 is discharged outside the membrane separation device 10 via the feed space outlet 13b. The non-permeated fluid 81 is typically a liquid.

The pervaporation membrane 11 of the membrane separation device 10 allows the organic compound C contained in the fermented liquid S to preferentially permeate therethrough. Accordingly, the permeated fluid 80 obtained by the operation of the membrane separation device 10 has a content of the organic compound C higher than that in the fermented liquid S to be supplied to the membrane separation device 10. A ratio of the content (wt%) of the organic compound C in the permeated fluid 80 with respect to the content (wt%) of the organic compound C in the fermented liquid S is not particularly limited.

As described above, the membrane separation system 100 adjusts, in the membrane separation step, the temperature of the membrane separation device 10 so that the absolute value (|T1-T2|) of the difference between the temperature T1 (°C) of the fermented liquid S to be supplied to the membrane separation device 10 and the temperature T2 (°C) of the non-permeated fluid 81 discharged from the membrane separation device 10 is less than 10°C. In other words, the membrane separation step is performed in such a manner as not to allow a significant temperature change to occur in the fermented liquid S (the non-permeated fluid 81) processed with the pervaporation membrane 11. The temperature of the membrane separation device 10 can be adjusted by, for example, heating the membrane separation device 10 with the heating unit 50.

In the case where the above-mentioned absolute value |T1-T2| is less than 10°C and a temperature change in the fermented liquid S is suppressed in the membrane separation step, it is possible to inhibit the microorganism capable of generating the fermented product from decreasing in the fermented liquid S. In the case where the temperature T1 is around the fermentation temperature of the microorganism, it is also possible to suppress a decrease of the microorganism in the fermented liquid S because even when the fermented liquid S (the non-permeated fluid 81) in which a temperature change is suppressed is supplied to the tank 20 as a fermenter, the temperature of the fermented liquid S stored in the tank 20 hardly changes. Accordingly, the membrane separation system 100 of the present embodiment makes it possible, by a process (the membrane separation step) using the pervaporation membrane 11, to obtain the non-permeated fluid 81 sufficiently suitable to be reused. The membrane separation system 100 of the present embodiment does not require to remove in advance the microorganism contained in the fermented liquid S before supplying the fermented liquid S to the membrane separation device 10, and thus does not need to include a pretreatment device (such as a filter) for removing the microorganism in advance, for example.

The above-mentioned absolute value |T1-T2| is preferably less than 8°C, and may be less than 5°C, less than 3°C, or even less than 2°C. The absolute value |T1-T2| may be substantially 0°C. The temperature T2 of the non-permeated fluid 81 discharged from the membrane separation device 10 may be higher or lower than the temperature T1 of the fermented liquid S to be supplied to the membrane separation device 10. The temperature T2 is, for example, 15°C to 75°C, and may be 30°C to 75°C, or 30°C to 50°C. A ratio T2/T1 of the temperature T2 with respect to the temperature T1 is not particularly limited.

It is possible to stop the above-mentioned membrane separation step by increasing the pressure in the permeation space of the membrane separation device 10. The pervaporation membrane 11 of the membrane separation device 10 may be washed by a known method after the membrane separation step is stopped. The pervaporation membrane 11 can be washed on a regular basis or at any timing.

The operating method of the present embodiment makes it possible, for example, to produce the permeated fluid 80 having a high content of the organic compound C. In other words, the operating method of the present embodiment makes it possible to produce the organic compound C as the permeated fluid 80.

In another aspect, the present invention provides a method for producing the organic compound C, including:
the supply step of supplying the fermented liquid S containing the volatile organic compound C and the microorganism that generates the organic compound C to the membrane separation device 10 including the pervaporation membrane 11;
the membrane separation step of separating the fermented liquid S into the permeated fluid 80 and the non-permeated fluid 81 with the pervaporation membrane 11; and
a recovery step of recovering the permeated fluid 80, wherein
the membrane separation step is performed in a state in which the temperature of the membrane separation device 10 is adjusted so that the absolute value of the difference between the temperature T1 (°C) of the fermented liquid S supplied in the supply step and the temperature T2 (°C) of the non-permeated fluid 81 discharged from the membrane separation device 10 is less than 10°C, and
the content of the organic compound C in the permeated fluid 80 is higher than the content of the organic compound C in the fermented liquid S.

### [Modification of membrane separation device]

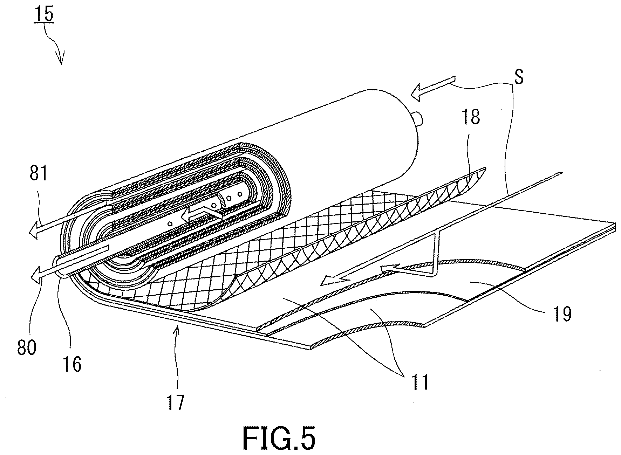

The membrane separation device 10 may be a spiral membrane element, a hollow fiber membrane element, a disk tube membrane element in which a plurality of pervaporation membranes are laminated, a plate-and-flame membrane element, or the like. FIG. 5 shows a spiral membrane element. A membrane separation device 15 of FIG. 5 includes a central tube 16 and a laminate 17. The laminate 17 includes the pervaporation membrane 11.

The central tube 16 has a cylindrical shape. The central tube 16 has a surface with a plurality of holes or slits to allow the permeated fluid 80 to flow into the central tube 16. Examples of a material of the central tube 16 include: a resin such as an acrylonitrile-butadiene-styrene copolymer resin (an ABS resin), a polyphenylene ether resin (a PPE resin), or a polysulfone resin (a PSF resin); and a metal such as stainless steel or titanium. The central tube 16 has an inner diameter in a range of, for example, 20 to 100 mm.

The laminate 17 further includes a feed-side flow passage material 18 and a permeation-side flow passage material 19 in addition to the pervaporation membrane 11. The laminate 17 is wound around the central tube 16. The membrane separation device 15 may be further provided with an exterior material (not shown).

As the feed-side flow passage material 18 and the permeation-side flow passage material 19, a resin net, woven fabric, or knitted fabric composed of polyethylene, polypropylene, polyethylene terephthalate (PET), polyphenylene sulfide (PPS), or an ethylene-chlorotrifluoroethylene copolymer (ECTFE) can be used, for example.

The membrane separation device 15 can be operated by the following method, for example. First, the fermented liquid S is supplied into an end of the wound laminate 17. A space inside the central tube 16 is decompressed. The permeated fluid 80 having permeated through the pervaporation membrane 11 of the laminate 17 thereby moves into the central tube 16. The permeated fluid 80 is discharged outside via the central tube 16. The fermented liquid S (the non-permeated fluid 81) processed by the membrane separation device 15 is discharged outside from another end of the wound laminate 17.

### [Modifications of membrane separation system]

The membrane separation system 100 may include a plurality of the membrane separation devices 10, and the plurality of the membrane separation devices 10 may be connected to each other in series or in parallel. In the present description, the phrase "a plurality of the membrane separation devices 10 are connected to each other in series" refers to a configuration in which a plurality of the membrane separation devices 10 are connected to each other in such a manner that the fermented liquid S (the non-permeated fluid during operation of the membrane separation system) discharged from the feed space of the membrane separation device 10 that precedes is supplied to the feed space of the membrane separation device 10 that follows the preceding one. The phrase "a plurality of the membrane separation devices 10 are connected to each other in parallel" refers to a configuration in which a plurality of the membrane separation devices 10 are connected to each other in such a manner that the fermented liquid S delivered from the tank 20 is supplied to the feed space of each of the plurality of the membrane separation devices 10. The number of the membrane separation devices 10 in the membrane separation system 100 is, for example, but not particularly limited to, 2 to 5.

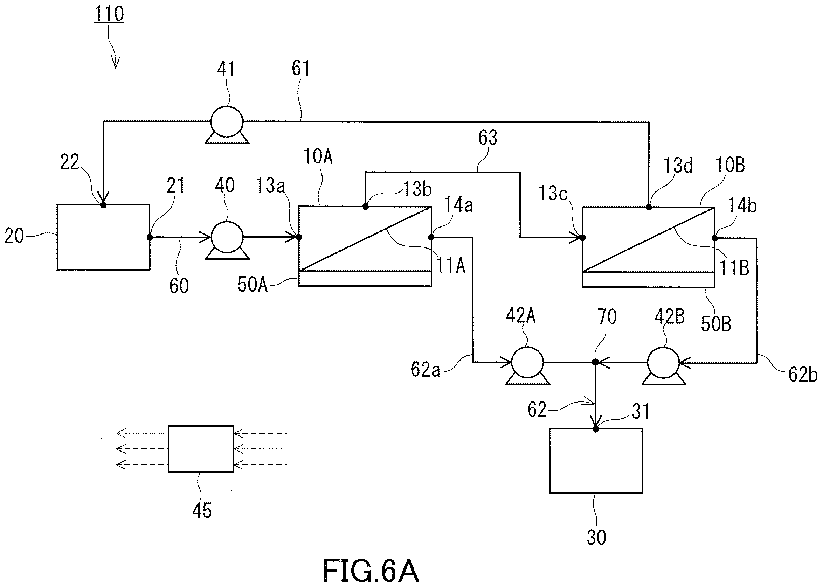

FIG. 6A is a schematic configuration diagram showing a membrane separation system 110 including two membrane separation devices 10A and 10B connected to each other in series. The membrane separation system 110 has the same configuration as that of the membrane separation system 100, except that the membrane separation system 110 includes the two membrane separation devices 10A and 10B, and so on. Therefore, the elements common between the above-mentioned membrane separation system 100 and the membrane separation system 110 that is a modification are denoted by the same reference numerals, and the description of such elements may be omitted. That is, the description of one embodiment is applicable to the other embodiment unless technical inconsistency occurs. Furthermore, the features of the embodiments may be combined with each other unless technical inconsistency occurs.

As described above, the membrane separation devices 10A and 10B are connected to each other in series in the membrane separation system 110. Specifically, the membrane separation system 110 further includes a connection passage 63 that connects the membrane separation devices 10A and 10B to each other. The connection passage 63 is connected to the feed space outlet 13b of the membrane separation device 10A and a feed space inlet 13c of the membrane separation device 10B. Note that the fermented liquid feed passage 60 is connected to the feed space inlet 13a of the membrane separation device 10A, and the non-permeated fluid discharge passage 61 is connected to a feed space outlet 13d of the membrane separation device 10B.

The permeated fluid discharge passage 62 has a first portion 62a and a second portion 62b. The first portion 62a of the permeated fluid discharge passage 62 is connected to the permeation space outlet 14a of the membrane separation device 10A, and the second portion 62b is connected to a permeation space outlet 14b of the membrane separation device 10B. The second portion 62b joins the first portion 62a at a joining point 70.

The permeated fluid discharge passage 62 is provided with two decompression devices 42A and 42B, for example. The decompression device 42A is positioned between the membrane separation device 10A and the joining point 70, and can decompress an inside of a permeation space of the membrane separation device 10A. The decompression device 42B is positioned between the membrane separation device 10B and the joining point 70, and can decompress an inside of a permeation space of the membrane separation device 10B. However, the permeated fluid discharge passage 62 may be provided with one decompression device, and the decompression device may be positioned between the joining point 70 and the recovery unit 30. That is, one decompression device may be shared by the membrane separation devices 10A and 10B.

The membrane separation system 110 includes a heating unit 50A that heats the membrane separation device 10A, and a heating unit 50B that heats the membrane separation device 10B. The heating unit 50A is positioned in the vicinity of the membrane separation device 10A and is, for example, in direct contact with the membrane separation device 10A. The heating unit 50B is positioned in the vicinity of the membrane separation device 10B and is, for example, in direct contact with the membrane separation device 10B.

Note that in the membrane separation system 110, a pervaporation membrane 11A of the membrane separation device 10A may be the same as or different from a pervaporation membrane 11B of the membrane separation device 10B except for its membrane area. A ratio of a membrane area (m²) of the pervaporation membrane 11A with respect to a total value (m²) of the membrane area of the pervaporation membrane 11A and a membrane area of the pervaporation membrane 11B is not particularly limited.

The membrane separation system 110 can be operated by the following method. First, in the supply step, the pump 40 is activated and the fermented liquid S is supplied from the tank 20 to the membrane separation device 10A , and the fermented liquid S is further supplied to the membrane separation device 10B from the membrane separation device 10A. Thereby, each of the pervaporation membrane 11A of the membrane separation device 10A and the pervaporation membrane 11B of the membrane separation device 10B can be brought into contact with the fermented liquid S.

Next, the permeation space of the membrane separation device 10A is decompressed via the permeation space outlet 14a, and the permeation space of the membrane separation device 10B is decompressed via the permeation space outlet 14b. Thereby, the membrane separation step can be performed by each of the membrane separation devices 10A and 10B, and the permeated fluid can be obtained from each of the membrane separation devices 10A and 10B. Note that the fermented liquid S (the non-permeated fluid) processed by the membrane separation device 10A is delivered to the membrane separation device 10B via the connection passage 63 and further processed by the membrane separation device 10B.

In the membrane separation step, the membrane separation system 110 adjusts a temperature of the membrane separation device 10A so that an absolute value |T1A-T2A| of a difference between a temperature T1A (°C) of the fermented liquid S to be supplied to the membrane separation device 10A and a temperature T2A (°C) of the non-permeated fluid discharged from the membrane separation device 10A is less than 10°C. Similarly, the membrane separation system 110 adjusts a temperature of the membrane separation device 10B so that an absolute value |T1B-T2B| of a difference between a temperature T1B (°C) of the fermented liquid S (the non-permeated fluid discharged from the membrane separation device 10A) to be supplied to the membrane separation device 10B and a temperature T2B (°C) of the non-permeated fluid discharged from the membrane separation device 10B is less than 10°C. It is possible to adjust the temperatures of the membrane separation devices 10A and 10B by heating them with the heating units 50A and 50B, respectively.

It is particularly preferable that the membrane separation system 110 adjust the temperatures of the membrane separation devices 10A and 10B so that an absolute value |T1A-T2B| of a difference between the temperature T1A(°C) of the fermented liquid S to be supplied to the membrane separation device 10A and the temperature T2B (°C) of the non-permeated fluid discharged from the membrane separation device 10B is less than 10°C.

Next, it is possible to stop the membrane separation step by increasing the pressure in the permeation space of at least one of the membrane separation devices 10A and 10B.

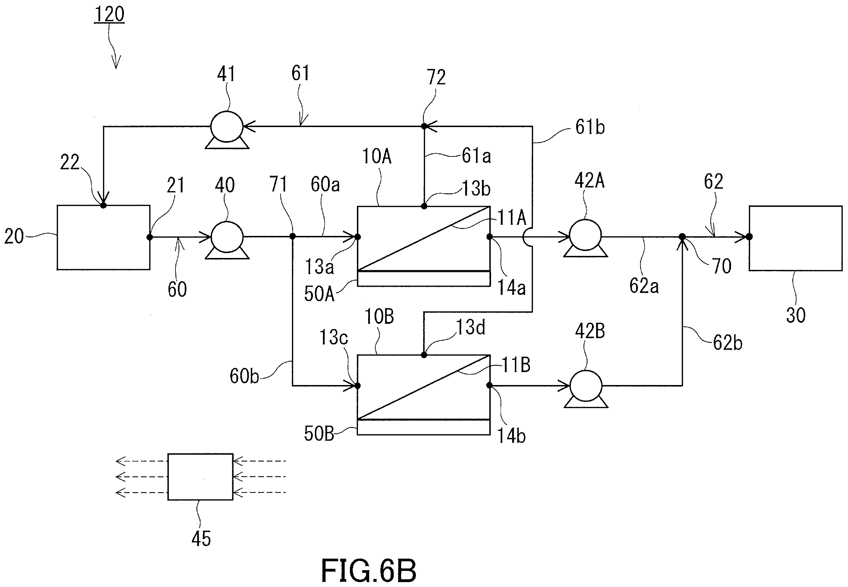

FIG. 6B is a schematic configuration diagram showing a membrane separation system 120 including the two membrane separation devices 10A and 10B connected to each other in parallel. The membrane separation system 120 has the same configuration as that of the membrane separation system 100, except that the membrane separation system 120 includes the two membrane separation devices 10A and 10B, and so on.

As described above, in the membrane separation system 120, the membrane separation devices 10A and 10B are connected to each other in parallel. Specifically, the fermented liquid feed passage 60 has a first portion 60a and a second portion 60b. The first portion 60a of the fermented liquid feed passage 60 is connected to the feed space inlet 13a of the membrane separation device 10A, and the second portion 60b is connected to the feed space inlet 13c of the membrane separation device 10B. The second portion 60b is branched from the first portion 60a at a branch point 71. The branch point 71 is positioned between the pump 40 and the membrane separation device 10A, for example.

Furthermore, the non-permeated fluid discharge passage 61 has a first portion 61a and a second portion 61b. The first portion 61a of the non-permeated fluid discharge passage 61 is connected to the feed space outlet 13b of the membrane separation device 10A, and the second portion 61b is connected to the feed space outlet 13d of the membrane separation device 10B. The second portion 61b joins the first portion 61a at a joining point 72. The joining point 72 is positioned between the pump 41 and the membrane separation device 10A, for example.

As in the membrane separation system 110 mentioned above, the permeated fluid discharge passage 62 has the first portion 62a and the second portion 62b. The first portion 62a of the permeated fluid discharge passage 62 is connected to the permeation space outlet 14a of the membrane separation device 10A, and the second portion 62b is connected to the permeation space outlet 14b of the membrane separation device 10B. The second portion 62b joins the first portion 62a at the joining point 70.

The permeated fluid discharge passage 62 is provided with the two decompression devices 40A and 40B, for example. The decompression device 42A is positioned between the membrane separation device 10A and the joining point 70, and can decompress the inside of the permeation space of the membrane separation device 10A. The decompression device 42B is positioned between the membrane separation device 10B and the joining point 70, and can decompress the inside of the permeation space of the membrane separation device 10B. However, the permeated fluid discharge passage 62 may be provided with one decompression device, and the decompression device may be positioned between the joining point 70 and the recovery unit 30. That is, one decompression device may be shared by the membrane separation devices 10A and 10B.

The membrane separation system 120 includes the heating unit 50A that heats the membrane separation device 10A, and the heating unit 50B that heats the membrane separation device 10B. The heating unit 50A is positioned in the vicinity of the membrane separation device 10A and is, for example, in direct contact with the membrane separation device 10A. The heating unit 50B is positioned in the vicinity of the membrane separation device 10B and is, for example, in direct contact with the membrane separation device 10B.

In the membrane separation system 120, the pervaporation membrane 11A of the membrane separation device 10A may be the same as or different from the pervaporation membrane 11B of the membrane separation device 10B. The ratio of the membrane area (m²) of the pervaporation membrane 11A with respect to the total value (m²) of the membrane area of the pervaporation membrane 11A and the membrane area of the pervaporation membrane 11B is not particularly limited.

The membrane separation system 120 can be operated by the following method. First, in the supply step, the pump 40 is activated and the fermented liquid S is supplied from the tank 20 to each of the membrane separation devices 10A and 10B. Thereby, each of the pervaporation membrane 11A of the membrane separation device 10A and the pervaporation membrane 11B of the membrane separation device 10B can be brought into contact with the fermented liquid S.

Next, the permeation space of the membrane separation device 10A is decompressed via the permeation space outlet 14a, and the permeation space of the membrane separation device 10B is decompressed via the permeation space outlet 14b. Thereby, the membrane separation step can be performed by each of the membrane separation devices10A and 10B, and the permeated fluid can be obtained from each of the membrane separation devices 10A and 10B.

In the membrane separation step, the membrane separation system 120 adjusts the temperature of the membrane separation device 10A so that the absolute value |T1A-T2A| of the difference between the temperature T1A (°C) of the fermented liquid S to be supplied to the membrane separation device 10A and the temperature T2A (°C) of the non-permeated fluid discharged from the membrane separation device 10A is less than 10°C. Similarly, the membrane separation system 120 adjusts the temperature of the membrane separation device 10B so that the absolute value |T1B-T2B| of the difference between the temperature T1B (°C) of the fermented liquid S to be supplied to the membrane separation device 10B and the temperature T2B (°C) of the non-permeated fluid discharged from the membrane separation device 10B is less than 10°C. It is possible to adjust the temperatures of the membrane separation devices 10A and 10B by heating them with the heating units 50A and 50B, respectively.

Next, it is possible to stop the membrane separation step by increasing the pressure in the permeation space of at least one of the membrane separation devices 10A and 10B.

### <Embodiment 2>

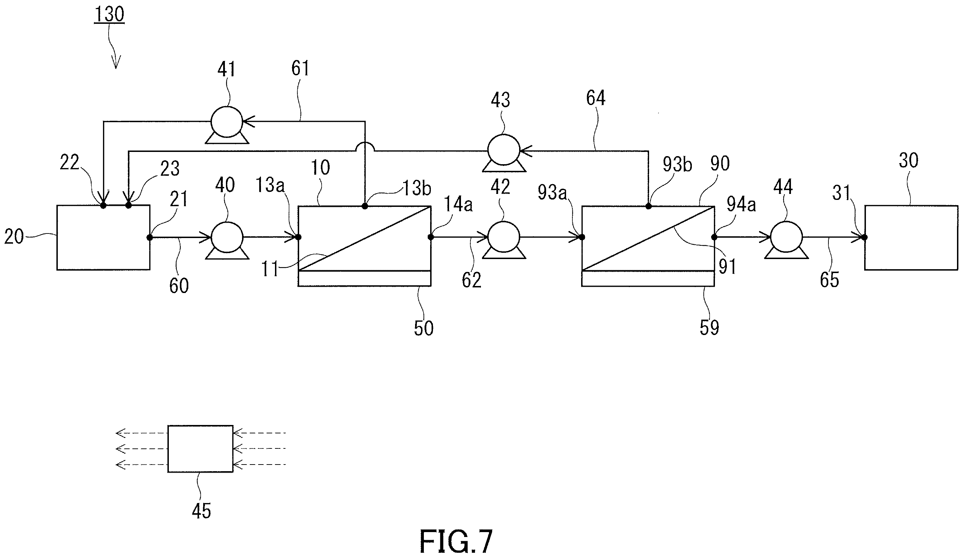

As shown in FIG. 7, a membrane separation system 130 of Embodiment 2 further includes a second membrane separation device 90, a heating unit 59, a second non-permeated fluid discharge passage 64, and a second permeated fluid discharge passage 65. Except for the above, the membrane separation system 130 has the same configuration as that of the membrane separation system 100.

The second membrane separation device 90 has a second pervaporation membrane 91 that separates the permeated fluid (a first permeated fluid) discharged from the membrane separation device (a first membrane separation device) 10 into a second permeated fluid and a second non-permeated fluid. The second pervaporation membrane 91 is typically a membrane that allows the organic compound C contained in the fermented liquid S to preferentially permeate therethrough. Accordingly, the second permeated fluid separated by the second pervaporation membrane 91 has a content of the organic compound C higher than that in the first permeated fluid. In contrast, the second non-permeated fluid has a content of the organic compound C lower than that in the first permeated fluid.

The second pervaporation membrane 91 may be the same as or different from the pervaporation membrane (a first pervaporation membrane) 11 that the first membrane separation device 10 has. A ratio of a membrane area (m²) of the first pervaporation membrane 11 with respect to a total value (m²) of the membrane area of the first pervaporation membrane 11 and a membrane area of the second pervaporation membrane 91 is not particularly limited.

The heating unit 59 can heat the second membrane separation device 90. The heating unit 59 is positioned in the vicinity of the second membrane separation device 90 and is, for example, in direct contact with the second membrane separation device 90. As the heating unit 59, those mentioned above for the heating unit 50 can be used.

The permeated fluid discharge passage (a first permeated fluid discharge passage) 62 is, for example, connected to a feed space inlet 93a of the second membrane separation device 90 and configured to deliver the first permeated fluid from the first membrane separation device 10 to the second membrane separation device 90 during operation. The first permeated fluid discharge passage 62 may be provided with a temperature sensor (not shown) for measuring a temperature T5 of the first permeated fluid to be supplied to the second membrane separation device 90. The temperature sensor is positioned between the second membrane separation device 90 and the decompression device 42, for example, and preferably in the vicinity of the feed space inlet 93a of the second membrane separation device 90.

The second non-permeated fluid discharge passage 64 is a passage for discharging the second non-permeated fluid from the second membrane separation device 90 during operation, and is connected to a feed space outlet 93b of the second membrane separation device 90. The second non-permeated fluid discharge passage 64 is provided, for example, with a pump 43 that controls a flow rate of the second non-permeated fluid. The second non-permeated fluid discharge passage 64 may be provided with a temperature sensor (not shown) for measuring a temperature T6 of the second non-permeated fluid discharged from the second membrane separation device 90. The temperature sensor is positioned between the second membrane separation device 90 and the pump 43, for example, and preferably in the vicinity of the feed space outlet 93b of the second membrane separation device 90.

The second non-permeated fluid discharge passage 64 may be connected to an inlet 23 of the tank 20 and configured to deliver the second non-permeated fluid to the tank 20 during operation. That is, the second non-permeated fluid may be mixed with the fermented liquid S in the tank 20 during operation. In the case where the second non-permeated fluid is delivered to the tank 20, the fermented liquid S is mixed with the second non-permeated fluid and the content of the organic compound C in the fermented liquid S decreases in the tank 20. In the case where the tank 20 is a fermenter, a decrease in the content of the organic compound C in the fermented liquid S can inhibit the fermentation by the microorganism from stopping, thereby making it possible to produce the fermented product continuously.

Note that the second non-permeated fluid discharge passage 64 may be connected to the non-permeated fluid discharge passage (a first non-permeated fluid discharge passage) 61 instead of the inlet 23 of the tank 20. In this case, the first non-permeated fluid is mixed with the second non-permeated fluid at a joining point at which the first non-permeated fluid discharge passage 61 joins the second non-permeated fluid discharge passage 64. A mixture of the first non-permeated fluid and the second non-permeated fluid is delivered to the tank 20 via the first non-permeated fluid discharge passage 61.

The second permeated fluid discharge passage 65 is a passage for discharging the second permeated fluid from the second membrane separation device 90 during operation, and is connected to a permeation space outlet 94a of the second membrane separation device 90. The second permeated fluid discharge passage 65 may be connected to the inlet 31 of the recovery unit 30 and configured to deliver the second permeated fluid to the recovery unit 30 during operation.

The second permeated fluid discharge passage 65 is provided with a decompression device 44, for example. The decompression device 44 can decompress an inside of a permeation space of the second membrane separation device 90. As the decompression device 44, those mentioned above for the decompression device 42 can be used. The second permeated fluid discharge passage 65 may be further provided with a heat exchanger for cooling the second permeated fluid. The heat exchanger makes it possible to condense the second permeated fluid that is a gas. The heat exchanger is, for example, a gas-liquid heat exchanger that causes heat exchange between a cooling medium, such as an antifreeze, and the permeated fluid that is a gas. The heat exchanger may be positioned between the second membrane separation device 90 and the decompression device 44 (upstream of the decompression device 44), or between the decompression device 44 and the recovery unit 30 (downstream of the decompression device 44).

The membrane separation system 130 can be operated by the following method. First, the supply step and the membrane separation step mentioned above are performed using the first membrane separation device 10. Thereby, the first permeated fluid is discharged from the first membrane separation device 10. The first permeated fluid is supplied to the second membrane separation device 90 via the first permeated fluid discharge passage 62 and brought into contact with the second pervaporation membrane 91.

The first permeated fluid to be supplied to the second membrane separation device 90 is preferably in the state of a liquid. It is possible to obtain the first permeated fluid that is a liquid by, for example, condensing, with the heat exchanger, the first permeated fluid that is a gas and that has been discharged from the first membrane separation device 10. The first permeated fluid to be supplied to the second membrane separation device 90 may or may not be heated in advance. The temperature T5 of the first permeated fluid to be supplied to the second membrane separation device 90 is, for example, 15°C to 75°C, and may be 30°C to 75°C, or 30°C to 50°C.

Next, the permeation space of the second membrane separation device 90 is decompressed via the permeation space outlet 94a so that the membrane separation step is performed by the second membrane separation device 90. Thereby, the first permeated fluid can be separated into the second permeated fluid and the second non-permeated fluid. As conditions for the membrane separation step by the second membrane separation device 90, those stated above as the conditions for the membrane separation step by the first membrane separation device 10 can be mentioned.

In the membrane separation step, the membrane separation system 130 may adjust a temperature of the second membrane separation device 90 so that an absolute value |T5-T6| of a difference between the temperature T5 (°C) of the first permeated fluid to be supplied to the second membrane separation device 90 and the temperature T6 (°C) of the second non-permeated fluid discharged from the second membrane separation device 90 is less than 10°C. In other words, the membrane separation step may be performed in such a manner as not to allow a significant temperature change to occur in the first permeated fluid (the second non-permeated fluid) processed with the second pervaporation membrane 91. In the case where the temperature T5 is around the fermentation temperature of the microorganism, it is possible to suppress a decrease of the microorganism in the fermented liquid S because even when the first permeated fluid (the second non-permeated fluid) in which a temperature change is suppressed is supplied to the tank 20 as a fermenter, the temperature of the fermented liquid S stored in the tank 20 hardly changes.

The above-mentioned absolute value |T5-T6| is preferably less than 8°C, and may be less than 5°C, less than 3°C, or even less than 2°C. The absolute value |T5-T6| may be substantially 0°C. The temperature T6 of the second non-permeated fluid discharged from the second membrane separation device 90 may be higher or lower than the temperature T5 of the first permeated fluid to be supplied to the second membrane separation device 90. The temperature T6 is, for example, 15°C to 75°C, and may be 30°C to 75°C, or 30°C to 50°C. A ratio T6/T5 of the temperature T6 with respect to the temperature T5 is not particularly limited.

### EXAMPLES

Hereinafter, the present invention will be described in more detail by way of measurement examples, but the present invention is not limited to these examples.

### [Production of pervaporation membrane]

First, a pervaporation membrane was produced by the following method. A coating liquid was prepared by mixing 1.650 kg (solids concentration: 30 wt%) of a silicone resin (YSR3022 available from Momentive Performance Materials Japan LLC.), 2.805 kg of toluene, 0.495 kg of a high-silica zeolite (HiSiv 3000 available from UNION SHOWA K.K.), 0.0495 kg of a silicone curing catalyst (YC6831 available from Momentive Performance Materials Japan LLC.), and 0.0495 kg of acetylacetone as a curing retardant. Next, the coating liquid was applied onto a porous support (RS-50 available from Nitto Denko Corporation) having a thickness of 150 µm to obtain a coating (thickness: 500 µm). The coating was heated at 90°C for 4 minutes and then dried to produce a separation functional layer having a thickness of 50 µm. The weight ratio between the silicone resin and the high-silica zeolite was 50:50 in the separation functional layer. A pervaporation membrane was thus obtained.

### [Production of membrane separation device]

A spiral membrane element (a membrane separation device) as shown in FIG. 5 was produced using the produced pervaporation membrane. The membrane element had an outer diameter of 4 inches (10.16 cm). The pervaporation membrane in the membrane element had a membrane area of 6 m².

### (Measurement Example 1)

The supply step and the membrane separation step were performed by the membrane separation device in the state in which the membrane separation device was heated using the heating unit shown in FIG. 2. Specifically, a liquid mixture composed of isopropanol (IPA) and water was first supplied to the feed space of the membrane separation device at a flow rate of 500 mL/min. The content of the IPA in the liquid mixture was 5 wt%. The temperature T1 of the liquid mixture supplied to the membrane separation device was 43.6°C.

Next, the space (the permeation space) inside the central tube of the membrane separation device was decompressed to 1.3 kPa to perform the membrane separation step. Thereby, the liquid mixture was separated into the permeated fluid and the non-permeated fluid. As described above, the membrane separation step was performed in the state in which the membrane separation device was heated using the heating unit shown in FIG. 2. As the heating medium, warm water with a temperature of 43.6°C was introduced to the accommodation space of the heating unit. The temperature T2 of the non-permeated fluid discharged from the membrane separation device by the membrane separation step was 42.0°C. The permeated fluid was obtained at a flow rate of 6 to 7 mL/min.

### (Measurement Example 2)

The supply step and the membrane separation step were performed by the membrane separation device according to the same method as that of Measurement Example 1, except that the membrane separation device was not heated. As a result, the temperature T2 of the non-permeated fluid discharged from the membrane separation device was 32.2°C.

**[Table 1]**

| | Heated/ Not heated | Temperature T1 [°C] (*1) | Temperature T2 [°C] (*2) | \|T1-T2\| |
|---|---|---|---|---|
| Measurement Example 1 | Heated | 43.6 | 42.0 | 1.6 |
| Measurement Example 2 | Not heated | 43.6 | 32.2 | 11.4 |

| | | | | |
|---|---|---|---|---|
| (*1) Temperature T1 of the liquid mixture supplied to the membrane separation device. (*2) Temperature T2 of the non-permeated fluid discharged from the membrane separation device. | | | | |

In Measurement Example 1 in which the membrane separation device was heated, the absolute value |T1-T2| of the difference between the temperature T1 and the temperature T2 was less than 10°C while the absolute value |T1-T2| exceeded 10°C in Measurement Example 2 in which the membrane separation device was not heated. It is inferred that in the case where the membrane separation device is operated using the fermented liquid as the feed liquid under the conditions of Measurement Example 1, the microorganism capable of generating the fermented product is inhibited from decreasing in the fermented liquid (the non-permeated fluid) processed with the pervaporation membrane and the fermented liquid (the non-permeated fluid) is sufficiently suitable to be reused.

### INDUSTRIAL APPLICABILITY

The membrane separation system of the present embodiment makes it possible, by a process using a pervaporation membrane, to obtain a non-permeated fluid sufficiently suitable to be reused.

## Claims

1. A membrane separation system comprising a membrane separation device, wherein
the membrane separation device has a pervaporation membrane,
the pervaporation membrane separates a fermented liquid containing a volatile organic compound and a microorganism that generates the organic compound into a permeated fluid and a non-permeated fluid, and
the membrane separation system adjusts a temperature of the membrane separation device so that an absolute value of a difference between a temperature T1 (°C) of the fermented liquid to be supplied to the membrane separation device and a temperature T2 (°C) of the non-permeated fluid discharged from the membrane separation device is less than 10°C.

2. The membrane separation system according to claim 1, wherein the membrane separation system adjusts the temperature of the membrane separation device so that the absolute value is less than 3°C.

3. The membrane separation system according to claim 1, wherein the temperature T1 is 30°C to 75°C.

4. The membrane separation system according to claim 1, further comprising a heating unit that heats the membrane separation device.

5. The membrane separation system according to claim 1, wherein a content of the organic compound in the permeated fluid is higher than a content of the organic compound in the fermented liquid.

6. The membrane separation system according to claim 1, wherein the organic compound is an alcohol.

7. The membrane separation system according to claim 1, further comprising a tank that stores the fermented liquid to be supplied to the membrane separation device.

8. The membrane separation system according to claim 7, further comprising a non-permeated fluid discharge passage connected to the membrane separation device and configured to discharge the non-permeated fluid from the membrane separation device, wherein
the non-permeated fluid discharge passage is connected to the tank.

9. The membrane separation system according to claim 1, further comprising a second membrane separation device having a second pervaporation membrane that separates the permeated fluid into a second permeated fluid and a second non-permeated fluid.

10. The membrane separation system according to claim 9, wherein a temperature of the second non-permeated fluid discharged from the second membrane separation device is 30°C to 75°C.

11. The membrane separation system according to claim 9, further comprising:
a tank that stores the fermented liquid to be supplied to the membrane separation device; and
a second non-permeated fluid discharge passage connected to the second membrane separation device and configured to discharge the second non-permeated fluid from the second membrane separation device, wherein
the second non-permeated fluid discharge passage is connected to the tank.

12. A method for operating a membrane separation device having a pervaporation membrane, comprising:
a supply step of supplying a fermented liquid containing a volatile organic compound and a microorganism that generates the organic compound to the membrane separation device; and
a membrane separation step of separating the fermented liquid into a permeated fluid and a non-permeated fluid with the pervaporation membrane, wherein
the membrane separation step is performed in a state in which a temperature of the membrane separation device is adjusted so that an absolute value of a difference between a temperature T1 (°C) of the fermented liquid supplied in the supply step and a temperature T2 (°C) of the non-permeated fluid discharged from the membrane separation device is less than 10°C.
